# EUROPÄISCHE PATENTSCHRIFT

(11) **EP 1 795 786 B1**
(45) Veröffentlichungstag und Bekanntmachung des Hinweises auf die Patenterteilung: **14.07.2010**
(21) Anmeldenummer: 05026921.6
(22) Anmeldetag: 09.12.2005
(51) Int. Cl.: F16J 15/32

(54) **Fluidtechnisches Gerät, insbesondere Ventil**
Fluidic apparatus, in particular valve
Appareil hydraulique, en particulier valve

(43) Veröffentlichungstag der Anmeldung: 13.06.2007
(73) Patentinhaber: FESTO AG & Co. KG, 73734 Esslingen (DE)
(72) Erfinder: Räpke, Falk, 73760 Ostfildern (DE); Bogdanowicz, Grzegorz, 73760 Ostfildern (DE)
(74) Vertreter: Abel, Martin

(56) Entgegenhaltungen:
- US-A- 5 431 415

## Beschreibung

Die Erfindung betrifft fluidtechnisches Gerät, insbesondere Ventil, mit zwei in Richtung einer Hauptachse relativ zueinander linear bewegbaren Gerätekomponenten, von denen die eine Gerätekomponente die andere Gerätekomponente unter koaxialer Zwischenschaltung mindestens eines Dichtungsringes umschließt, der als Nutring mit einer zur statischen Abdichtung dienenden, eine radiale Grundfläche und eine axiale Rückfläche aufweisenden Basisabschnitt und einer zur dynamischen Abdichtung dienenden, vom Basisabschnitt wegragenden Dichtlippe ausgebildet ist, und der mit seinem Basisabschnitt an der als Haltekomponente fungierenden einen Gerätekomponente gehalten ist, so dass er bei der Relativbewegung mit seiner Dichtlippe an der anderen Gerätekomponente abgleiten kann.

Aus der DE 297 04 264 U1 ist ein als Arbeitszylinder ausgebildetes fluidtechnisches Gerät bekannt, bei dem ein als sogenannter Nutring ausgebildeter Dichtungsring an einer vom Kolben des Arbeitszylinders gebildeten Haltekomponente mit seinem Basisabschnitt befestigt ist und bei der Linearbewegung des Kolbens mit seiner Dichtlippe an der vom Zylindergehäuse gebildeten anderen Gerätekomponente abgleitet. Die Dichtlippe steht dabei in dynamischem Dichtkontakt mit dem Zylindergehäuse und ist radial nachgiebig an den Basisabschnitt angeformt, so dass sie sich an die abzudichtende Fläche des Zylindergehäuses anpassen kann. Zwischen dem Basisab schnitt und dem Kolben liegt eine statische Abdichtung vor, da zwischen diesen Komponenten keine oder nur geringe Relativbewegungen stattfinden. Ein vergleichbarer Dichtungsring könnte auch in einem zur Steuerung von Fluidströmen dienenden Ventil eingesetzt werden, wobei er am Ventilschieber gehalten und über die Dichtlippe mit dem Ventilgehäuse oder einer sonstigen gehäusefesten Komponente kooperiert.

Beim Einsatz derartiger fluidtechnischer Geräte treten Probleme auf, wenn eine feinfühlige Relativbewegung zwischen den beiden Gerätekomponenten gewünscht ist. Solche Anforderungen bestehen beispielsweise bei Regelventilen oder bei mit langsamer Arbeitsgeschwindigkeit zu betreibenden Arbeitszylindern. Aufgrund seiner aus der Formgebung resultierenden, relativ weichen Struktur wird der Dichtungsring durch die ihn von der Vorderseite bzw. Nutseite her beaufschlagenden fluidischen Druckkräfte relativ stark verformt, so dass er zwischen den Gerätekomponenten radial verspannt wird und verstärkt Reibung auftritt. Dies beeinträchtigt das Ansprechverhalten der zu bewegenden Gerätekomponente, kann ruckhafte Bewegungen nach sich ziehen und zu einer Hysterese bei eventuellen Regelungsaufgaben führen.

Eine vergleichbare Problematik ergibt sich bei dem aus der US-A-5,431,415 bekannten Arbeitszylinder der eingangs genannten Art, bei dem ein Nutring zur Abdichtung der Kolbenstange eines Arbeitszylinders eingesetzt wird.

In der DE 42 28 439 A1 und der DD 274262 A1 werden jeweils fluidtechnische Geräte unter anderem in Gestalt von Ventilen beschrieben, bei denen dem Problem auftretender Haftreibung dadurch begegnet wird, dass die Dichtungsringe an der einen Gerätekomponente verschwenkbar aufgehängt sind und sich zu Beginn der Relativbewegung an der anderen Gerätekomponente abwälzen können. Die Problematik einer verstärkten Reibung aufgrund der im Betrieb auftretenden radialen Verformung der Dichtungsringe wird dadurch jedoch nicht ausgeräumt.

Es ist die Aufgabe der vorliegenden Erfindung, ein fluidtechnisches Gerät zu schaffen, bei dem die Beeinträchtigung im Bewegungsverhalten zwischen den gegenseitig abzudichtenden Gerätekomponenten reduziert ist.

Zur Lösung dieser Aufgabe ist vorgesehen, dass im von der Vorderseite her Keiner Fluidbeaufschlagung ausgesetzten Zustand des Dichtungsringes zwischen dem Basisabschnitt des Dichtungsringes und der Haltekomponente ein zum Dichtungsring konzentrischer, sich durchgehend teils entlang der Rückfläche und teils entlang der Grundfläche erstreckender Verformungsfreiraum vorhanden ist, der dadurch begrenzt ist, dass der Basisabschnitt einerseits in einer Dichtungszone mit einer an der Grundfläche vorgesehenen, statisch dichtenden Dichtpartie und andererseits in einer Abstützzone mit einer an der Rückfläche vorgesehenen Abstützpartie an der Haltekomponente anliegt oder anliegen kann, wobei der Dichtungsring derart flexibel ausgebildet ist, dass sich sein Basisabschnitt bei einer im Einsatz von der Vorderseite her erfolgenden Fluidbeaufschlagung unter Verringerung des Querschnittes des Verformungsfreiraumes und bei gleichzeitigem Verschwenken um die Abstützzone nach rückwärts verlagern kann.

Auf diese weise wird durch eine besondere Strukturierung und aufeinander abgestimmte Formgebung von Dichtungsring und Haltekomponente auf die Verformung des Dichtungsringes Einfluss genommen, die dieser im Betrieb erfährt, wenn er von der Vorderseite, also seiner Nutseite her, mit fluidischem Druckmedium beaufschlagt wird. Durch die aufeinander abgestimmte Formgebung ergibt sich zwischen dem Basisabschnitt des Dichtungsringes und der Haltekomponente ein ringförmiger, zum Dichtungsring konzentrischer Verformungsfreiraum, der sich teils entlang der Rückfläche und teils entlang der Grundfläche des Dichtungsringes erstreckt, wobei die von diesen Flächen begrenzten Teilräume des Verformungsfreiraumes direkt ineinander übergehen, so dass sich quasi ein über Eck gehender Verlauf des Verformungsfreiraumes einstellt. Dabei ergibt sich eine Besonderheit aus dem Umstand, dass an der Rückfläche des Dichtungsringes eine Abstützpartie vorhanden ist, die sich am axial gegenüberliegenden Abschnitt der Haltekomponente abstützen kann, wobei diese Abstützzone sozusagen einen Momentanpol bildet, um den der Basisabschnitt geringfügig verschwenkt werden kann, wenn er axial mit Fluiddruck beaufschlagt wird. Die Abstützzone kann dabei geringfügig radial wandern, wie auch die von der statisch dichtenden Dichtpartie definierte Dichtungszone geringfügig axial wandern kann. Jedenfalls wird auf diese Weise ein Teil der auf den Dichtungsring einwirkenden Kräfte zur axialen Verlagerung des Basisabschnittes relativ zur Haltekomponente,aufgewendet und steht nicht zur axialen Stauchung des Materials des Dichtungsringes zur Verfügung, so dass die radiale Ausdehnung eingeschränkt ist und die radiale Kraftkomponente bzw. die damit zusammenhängende Reibungskraft nicht oder zumindest nur geringfügig erhöht wird. In der Folge lassen sich ungeachtet der axialen Fluidbeaufschlagung des Dichtungsringes sehr gleichförmige und ruckfreie Bewegungen zwischen den gegenseitig abzudichtenden Gerätekomponenten erzielen, wie auch ein optimiertes Ansprechverhalten.

Die erfindungsgemäße Maßnahme lässt sich praktisch bei jedwedem fluidtechnischem Gerät einsetzen, bei dem zwei relativ zueinander linear zu bewegende Gerätekomponenten einer gegenseitigen Abdichtung bedürfen. Lediglich exemplarisch seien an dieser Stelle Ventile und Arbeitszylinder oder sonstige fluidbetätigte Antriebe erwähnt.

Bei der den Dichtungsring tragenden Haltekomponente kann es sich um die im Betrieb ortsfeste oder um die sich im Betrieb bewegende Gerätekomponente des fluidtechnischen Gerätes handeln. Beispielsweise kann der Dichtungsring auf einem relativ zu einem Gehäuse zu bewegenden Kolben oder an einem eine sich bewegende Stange umgebenden Gehäuse gehalten sein.

Vorteilhafte Weiterbildungen der Erfindung gehen aus den Unteransprüchen hervor.

Die Haltekomponente ist zweckmäßigerweise so ausgebildet, dass sie eine der Rückfläche des Basisabschnittes axial gegenüberliegende Stirnfläche aufweist, die als Anschlagfläche zur Begrenzung der möglichen Verlagerungsstrecke des Basisabschnittes fungiert.

Die Auslegung kann so getroffen werden, dass der Dichtungsring im durch eine Fluidkraft beaufschlagten Zustand rückseitig vollflächig an der Anschlagfläche zur Anlage gelangt, so dass der dort zuvor noch vorhandene Teilraum des Verformungsfreiraumes komplett vom verdrängten Material des Dichtungsringes ausgefüllt ist.

Um den Verformungsfreiraum zu definieren, ist es möglich, entweder nur am Dichtungsring oder nur an der Haltekomponente oder an beiden dieser Körper eine oder mehrere Vertiefungen auszubilden. Am Einfachsten wird eine Lösung eingeschätzt, bei der der Dichtungsring auf einer kreiszylindrischen Mantelfläche der Haltekomponente sitzt und rückseitig von einer in einer Radialebene verlaufenden Stirnfläche der Haltekomponente flankiert ist, wobei das Entstehen des Verformungsfreiraumes durch eine entsprechend gestaltete Außenkontur des Dichtungsringes gewährleistet ist.

Als weitere zweckmäßige Maßnahme hat es sich erwiesen, die zur statischen Abdichtung gegenüber der Haltekomponente dienende Dichtpartie an dem der Rückfläche axial entgegengesetzten vorderen Endbereich der Grundfläche des Basisabschnittes vorzusehen. Ebenfalls vorteilhaft wird angesehen, die zur Definition der ringförmigen Abstützzone dienende Abstützpartie an dem der Grundfläche radial entgegengesetzten Endbereich der Rückfläche auszubilden.

Zumindest für den von der Rückfläche des Basisabschnittes begrenzten Teilraum des Verformungsfreiraumes erscheint es vorteilhaft, wenn er eine keilförmige Querschnittskontur mit im Bereich der Abstützzone liegender Keilspitze aufweist.

Nachfolgend wird die Erfindung anhand der beiliegenden Zeichnung näher erläutert. In dieser zeigen:
- Figur 1: einen Ausschnitt eines fluidtechnischen Gerätes im Bereich zweier relativ zueinander zu bewegender Gerätekomponenten im Längsschnitt,
- Figuren 2 bis 4: das Verformungsverhalten des bei der Anordnung gemäß Figur 1 vorhandenen Dichtungsringes in einer Schnittdarstellung in verschiedenen Phasen,
- Figuren 5 und 6: in jeweils einer der Figuren 1 entsprechenden Darstellungsweise zwei weitere bevorzugte Ausführungsformen eines erfindungsgemäßen fluidtechnischen Gerätes.

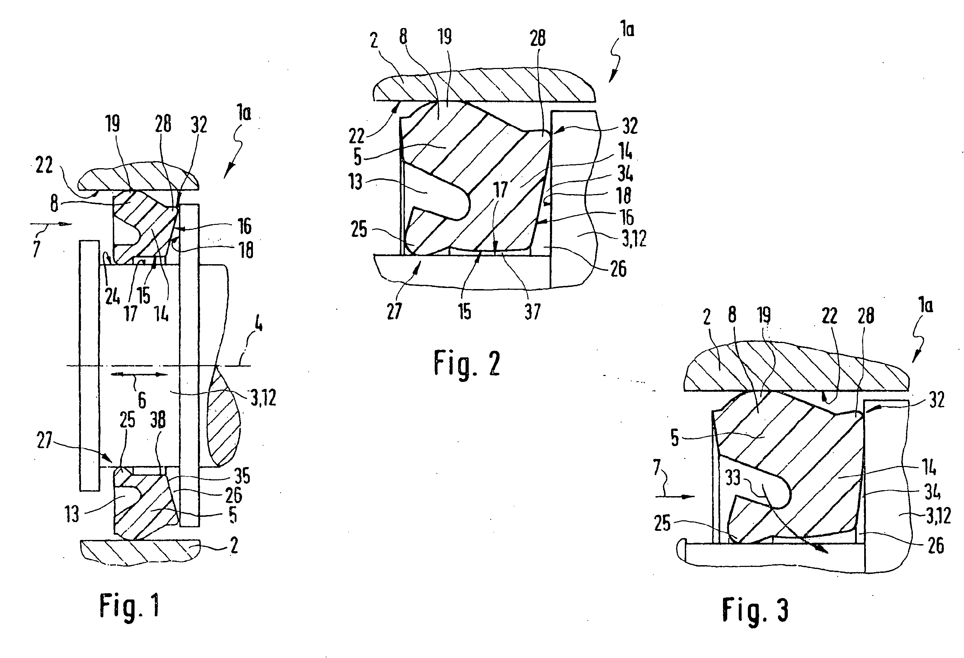

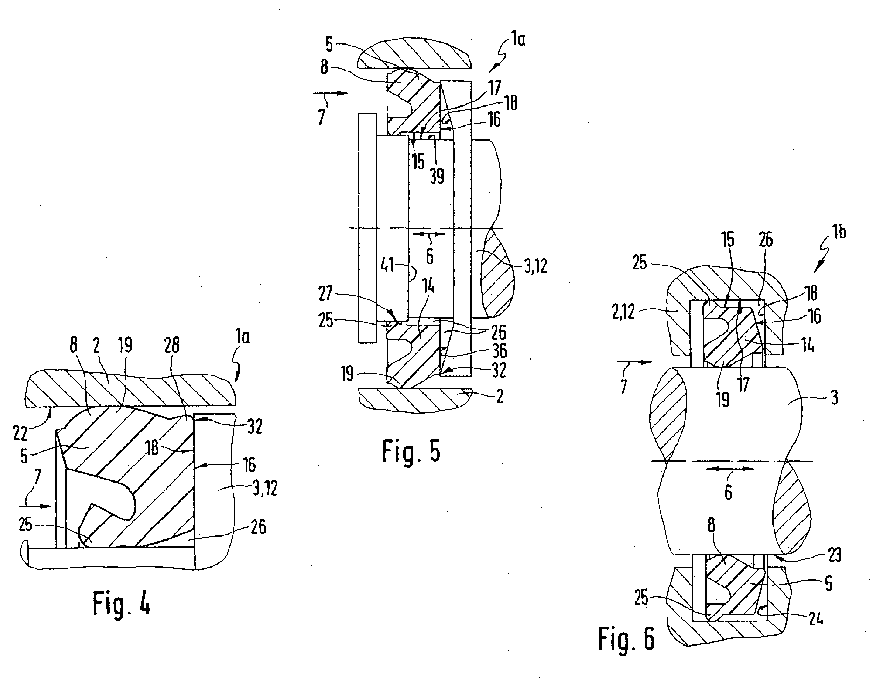

In der Zeichnung illustrieren die Figuren 1 bis 5 Ausschnitte eines als Ventil ausgebildeten fluidtechnischen Gerätes 1a, während die Figur 6 einen Ausschnitt eines als Arbeitszylinder, insbesondere als Pneumatikzylinder ausgebildeten fluidtechnischen Gerätes 1b zeigt. In beiden Gerätearten ist die erfindungsgemäße Abdichtungsmaßnahme verwirklicht. Es versteht sich, dass sie sich auch bei anderen Arten fluidtechnischer Geräte realisieren lässt.

Die fluidtechnischen Geräte 1a, 1b verfügen über eine im Betrieb des jeweiligen Gerätes in der Regel ortsfeste erste Gerätekomponente 2. Bei ihr handelt es sich um ein Gehäuse oder um eine gehäusefeste Komponente des betreffenden Gerätes 1a, 1b.

Ferner enthält jedes fluidtechnische Gerät 1a, 1b eine im Betrieb relativ zur ersten Gerätekomponente 2 entlang einer Hauptachse 4 linear verstellbare zweite Gerätekomponente 3. Bei dem Gerät 1a der Figuren 1 bis 5 handelt es sich dabei um einen Ventilschieber, bei dem Gerät 1b der Figur 6 um die mit einem nicht näher dargestellten Kolben verbundene Kolbenstange des Arbeitszylinders.

In allen Fällen wird die zweite Gerätekomponente 3 von der ersten Gerätekomponente 2 bezogen auf die Hauptachse 4 koaxial umschlossen. Dabei verbleibt allerdings zwischen den beiden Gerätekomponenten 2, 3 ein ringförmiger radialer Zwischenraum, in dem unter koaxialer Anordnung ein Dichtungsring 5 angeordnet ist. Dieser umschließt die zweite Gerätekomponente 3 und wird seinerseits von der ersten Gerätekomponente 2 umschlossen. Zwischen die beiden Gerätekomponenten 2, 3 könnten mit axialem Abstand zu dem Dichtungsring 5 noch weitere Dichtungsringe zwischengeschaltet sein, die jedoch nicht näher dargestellt sind. Insbesondere kann jeweils noch ein weiterer Dichtungsring 5 vorhanden sein, der bezüglich einer zur Hauptachse 4 rechtwinkeligen Radialebene spiegelbildlich zu dem vorhandenen Dichtungsring 5 ausgerichtet ist.

Um die im Betrieb zwischen den beiden Gerätekomponenten 2, 3 auftretende, durch einen Doppelpfeil angedeutete Relativbewegung 6 hervorzurufen, wird die zweite Gerätekomponente 3 mit einem fluidischen Druckmedium axial beaufschlagt. Diese Fluidbeaufschlagung ist bei 7 mit einem Pfeil kenntlich gemacht.

Es versteht sich, dass die beiden Gerätekomponenten 2, 3 je nach Gerätetyp auch derart betrieben werden können, das die zweite Gerätekomponente 3 ortsfest bleibt und die Relativbewegung 6 durch eine Linearbewegung der ersten Gerätekomponente 2 hervorgerufen wird.

Der Dichtungsring 5 ist an einer der beiden Gerätekomponenten 2,3 gehalten und verfügt über eine Dichtlippe 8, die an der jeweils anderen Gerätekomponente 2, 3 anliegt und an dieser bei der Relativbewegung 6 unter Gewährleistung eines dynamischen Dichtkontaktes abgleitet.

Bei dem in Figuren 1 bis 5 gezeigten Gerät 1a bildet die zweite Gerätekomponente 3 eine Haltekomponente 12, an der der Dichtungsring 5 fixiert ist. Da es sich hierbei um die im Betrieb die Linearbewegung ausführende Komponente handelt, wird folglich im Betrieb des Gerätes 1a der Dichtungsring 5 relativ zu der ersten Gerätekomponente 2 verlagert.

Bei dem in Figur 6 abgebildeten Gerät 1b stellt die erste Gerätekomponente 2 die Haltekomponente 12 dar. Hier bleibt der Dichtungsring 5 im Betrieb des Gerätes 1b ortsfest und die zweite Gerätekomponente 3 führt diesbezüglich eine Linearbewegung aus, so dass die stillstehende Dichtlippe 8 an der sich bewegenden zweiten Gerätekomponente 3 abgleitet.

Der Dichtungsring 5 ist als sogenannter Nutring ausgebildet, dessen Ringkörper, wie aus der Zeichnung ersichtlich ist, einen U-förmigen Querschnitt aufweist. Letzterer resultiert aus einer axial zur Vorderseite des Dichtungsringes 5 hin offenen Ringnut 13, durch die der Ringkörper in die schon erwähnte ringförmige Dichtlippe 8 und einen die Dichtlippe 8 tragenden Basisabschnitt 14 unterteilt ist. Die radial elastisch nachgiebige Dichtlippe 8 ragt vom Basisabschnitt 14 weg, mit dem sie insbesondere einstückig ausgebildet ist.

Der gesamte Dichtungsring 5 ist insbesondere ein insgesamt aus Material mit gummielastischen Eigenschaften bestehendes Bauteil. Beim Ausführungsbeispiel setzt es sich aus einem einzigen gummielastischen Kunststoffmaterial zusammen. Alternativ kann der Dichtungsring 5 beispielsweise auch ein spritzgegossener Mehrkomponenten-Kunststoffkörper sein oder aus gummielastischem Material mit Verstärkungseinlage bestehen.

Mit seinem Basisabschnitt 14 ist der Dichtungsring 5 an der Haltekomponente 12 fixiert. Der Basisabschnitt 14 verfügt über eine radial orientierte ringförmige Grundfläche 15 und eine der Ringnut 13 entgegengesetzte, axial orientierte und ebenfalls ringförmige Rückfläche 16. Insgesamt kann der Basisabschnitt 14 eine im Wesentlichen L-förmige Querschnittsgestalt aufweisen.

Der Grundfläche 15 liegt eine konzentrisch angeordnete ringförmige Mantelfläche 17, die ihr zugewandt ist, radial gegenüber. Eine zum Dichtungsring 5 koaxiale und axial orientierte Stirnfläche 18 mit ringförmiger Gestalt der Haltekomponente 12 liegt der Rückfläche 16, dieser zugewandt, axial gegenüber.

Bei dem in Figuren 1 bis 5 gezeigten Gerät 1b befindet sich die Mantelfläche 17 am Außenumfang der Haltekomponente 12 und ist nach radial außen orientiert. Die ringförmige Grundfläche 15 des auf ihr sitzenden Dichtungsringes 5 weist nach radial innen. Die Dichtlippe 8 ragt schräg nach außen und vorne und liegt mit einer umlaufenden, dynamisch dichtenden Dichtpartie 19 an einer sie umschließenden zylindrischen Innenfläche der ersten Gerätekomponente 2 unter radial nach außen gerichteter Vorspannung an.

Bei dem in Figur 6 illustrierten Gerät 1b ist die Mantelfläche 17 eine Innenmantelfläche der die Haltekomponente 12 bildenden ersten Gerätekomponente 2, die radial nach innen orientiert ist. Die Grundfläche 15 des Basisabschnittes 13 weist dementsprechend nach radial außen. Die Dichtlippe 8 ragt schrägt nach innen und vorne, um mit ihrer dynamischen Dichtpartie 19 an der zylindrischen Außenfläche 23 der zweiten Gerätekomponente 3 mit Dichtkontakt anzuliegen.

Während also bei dem Dichtungsring 5 des Gehäuses 1a der ringförmige Basisabschnitt 14 radial innen und die ringförmige Dichtlippe 8 radial außen angeordnet ist, liegt beim Gerät 1b eine umgekehrte Konstellation vor.

Bevorzugt ist die jeweiligen Haltekomponente 12 mit einer ringförmigen Aussparung 24 versehen, in der der Dichtungsring 5 mit zumindest seinem Basisabschnitt 14 aufgenommen ist. Die Mantelfläche 17 und die Stirnfläche 18 sind Begrenzungsflächen dieser Aussparung 24.

Wenn im Einsatz des fluidtechnischen Gerätes 1a, 1b an der der Ringnut 13 zugeordneten Vorderseite des Dichtungsringes 5 unter Überdruck stehendes fluidisches Druckmedium ansteht, verhindert der Dichtungsring 5 ein Hindurchströmen des Druckmediums durch den ihn aufnehmenden Ringspalt. Dabei übernimmt der Basisabschnitt 14 eine statische Dichtfunktion, weil er sich nicht oder nur kaum relativ bezüglich der ihn tragenden Haltekomponente 12 bewegt. Die Abdichtung gegenüber der anderen Gerätekomponente übernimmt die Dichtlippe 8.

Im eigentlichen Sinne verantwortlich für die statische Abdichtung ist eine an der Grundfläche 5 ausgebildete, bezüglich dem Dichtungsring 5 konzentrische Dichtpartie, die zur besseren Unterscheidung als statisch dichtende Dichtpartie 25 bezeichnet sei. Sie kann insbesondere wulstförmig ausgebildet sein und liegt im Betrieb mit radialer Vorspannung an der Mantelfläche 17 der Haltekomponente 12 an. Für die notwendige Dichtkraft sorgt insbesondere auch das in die Ringnut 13 eintretenden Druckmedium, das den Basisabschnitt im Bereich der statische dichtenden Dichtpartie 25 radial beaufschlagt. Auf die gleiche Weise wird im Übrigen auch eine radiale Stellkraft auf die Dichtlippe 18 ausgeübt, so dass deren dynamisch dichtende Dichtpartie 19 an die sich relativ zu ihr bewegende Komponente 2 bzw. 3 angedrückt wird.

Bei allen Ausführungsbeispielen sind der Basisabschnitt 14 des Dichtungsringes 5 und die Haltekomponente 12 derart konturiert, dass sich zwischen diesen beiden Teilen im von der Vorderseite her nicht einer Fluidbeaufschlagung 7 ausgesetzten Zustand des Dichtungsringes 5 ein zu letzterem konzentrischer Verformungsfreiraum 26 ergibt. Dieser erstreckt sich, im Querschnitt des Dichtungsringes 5 gesehen, teils entlang der Grundfläche 15 und, unmittelbar und ununterbrochen daran anschließend, teils auch entlang der Rückfläche 16. Begrenzt ist dieser ringförmige Verformungsfreiraum 26 einenends durch den Dichtkontakt zwischen der statisch dichtenden ringförmigen Dichtpartie 25 und der Mantelfläche 17 in der daraus resultierenden ringförmigen Dichtungszone 27. Die Begrenzung auf der anderen Seite übernimmt eine an der Rückfläche 16 des Basisabschnittes 14 ausgebildete, zum Dichtungsring 5 konzentrische ringförmige Abstützpartie 28, die in einer entsprechend ringförmigen Abstützzone 32 an der gegenüberliegenden Stirnfläche 18 der Haltekomponente 12 anliegt oder zumindest anliegen kann.

Durch diese besondere Gestaltung ergibt sich in Verbindung mit der Flexibilität bzw. Biegbarkeit des Dichtungsringes 5 ein dahingehender Effekt, dass der Basisabschnitt 14 von der im Betrieb auftretenden axialen Fluidbeaufschlagung 7 nach rückwärts in Richtung zu der Stirnfläche 18 gedrückt wird, wobei er gemäß Pfeil 33 in Figur 3 um die Abstützzone 32 verschwenkt wird und sich der freie Querschnitt des Verformungsfreiraumes 26 verringert.

Dieser Effekt ist sehr gut an Hand der Figuren 2 bis 4 nachzuvollziehen, die unterschiedliche Phasen des zugeordneten Bewegungsablaufes wiedergeben.

Im drucklosen Zustand gemäß Figur 2 besitzt der Verformungsfreiraum 26 seinen größten Querschnitt bzw. sein größtes freies Volumen. Der Dichtungsring 5 liegt hierbei mit der statisch dichtenden Dichtpartie 25 und der Abstützpartie 28 an der Haltekomponente 12 an. Allerdings ist darauf hinzuweisen, dass die Abstützpartie 28 in Fällen, in denen der Dichtungsring 5 mit axialem Spiel an der Haltekomponente 12 fixiert ist, zunächst einen geringen axialen Abstand zu der Stirnfläche 18 aufweisen kann, der geschlossen wird, wenn sich der Dichtungsring 5 bei der Fluidbeaufschlagung 7 mit seiner Abstützpartie 28 an besagte Stirnfläche 18 anlegt.

Im Zuge der Fluidbeaufschlagung 7 wird wie erwähnt der Basisabschnitt 14 gemäß Pfeil 33 verschwenkt (Figur 3), wobei sich der Verformungsfreiraum 26 verkleinert und insbesondere ein sich Annähern der Rückfläche 16 an die Stirnfläche 18 zu beobachten ist.

Der Endzustand ist erreicht, wenn gemäß Figur 4 der Dichtungsring 5 mit seinem Basisabschnitt 14 vollflächig an der Stirnfläche 18 zur Anlage gelangt ist. Hier bildet dann die Stirnfläche 18 eine Anschlagfläche, die ein weiteres Zurückweichen des Basisabschnittes 14 verhindert. Der ursprünglich zwischen der Rückfläche 16 und der Stirnfläche 18 vorhandene rückflächenseitige Teilraum 34 des Verformungsfreiraumes 26 ist nun komplett vom Material des Dichtungsringes 5 ausgefüllt.

Bedingt dadurch, dass ein Großteil der axial auf den Dichtungsring 5 einwirkenden Fluidkräfte für die axiale Verlagerung bzw. Verschwenkung des Basisabschnittes 14 aufzuwenden ist, wobei der Basisabschnitt 14 wegen der Möglichkeit seines Zurückweichens nicht oder nur geringfügig axial gestaucht wird, tritt eine nur geringe radiale Aufweitung des Ringkörpers des Dichtungsringes 5 zu Tage. Dies hat zur Folge, dass ein verstärktes radiales Verpressen des Dichtungsringes 5 zwischen den beiden Gerätekomponenten 2, 3 unterbleibt. Insbesondere erfährt auch die Dichtlippe 8 keine relevant zusätzliche radiale Stellkraft aus der Verformung des Basisabschnittes 14, die die Vorspannung erhöhen könnte. Somit ergeben sich ungeachtet der Höhe der Fluidbeaufschlagung 7 relativ konstante Beaufschlagungszustände, was eine gleichförmige Relativbewegung 6 zwischen den beiden Gerätekomponenten 2, 3 gewährleistet.

Um den Verformungsfreiraum 26 zu erhalten, kann sich die maßgebliche Formgebung auf sowohl den Dichtungsring 5 als auch die Haltekomponente 12 oder auf nur eine dieser Komponenten beziehen. Beim Ausführungsbeispiel der Figuren 1 bis 4 ist der Dichtungsring 5 rückseitig mit einer bevorzugt konischen, axialen Vertiefung 35 versehen, die im Zusammenspiel mit der in einer Radialebene verlaufenden Stirnfläche 18 einen rückflächenseitigen Teilraum 34 mit keilförmiger Querschnittkontur zur Folge hat. Die Keilspitze liegt dabei im Bereich der Abstützzone 32. Entsprechende Verhältnisse liegen bei der Ausführungsform gemäß Figur 6 vor.

Abweichend davon verfügt der Dichtungsring 5 beim Ausführungsbeispiel der Figur 5 über eine im nicht fluidbeaufschlagten Zustand in einer Radialebene verlaufende Rückfläche 16, der eine konisch verlaufende Stirnfläche 18 der Haltekomponente 12 gegenüberliegt, die aus einer konischen axialen Vertiefung 36 der Haltekomponente 12 resultiert.

Der grundflächenseitige Teilraum 37 des Verformungsfreiraumes 36 resultiert bei den Ausführungsbeispielen der Figuren 1 bis 4 und 6 aus einer ringförmigen radialen Vertiefung 38 des Dichtungsringes 6 im Bereich der Grundfläche 15. Daraus resultiert auch die die statisch dichtende Dichtpartie 20 bildende wulstartige Erhebung.

Während bei den Ausführungsbeispielen der Figuren 1 bis 4 und 6 die der Grundfläche 15 gegenüberliegende Mantelfläche 17 kreiszylindrisch und axial unabgestuft ausgebildet ist, ist sie beim Ausführungsbeispiel der Figur 5 mit einer ringförmigen Abstufung 41 versehen, aus der auch eine radiale Vertiefung 39 der Haltekomponente 12 resultiert. Prinzipiell wäre es allerdings auch denkbar, den grundflächenseitigen Teilraum 37 ausschließlich durch eine radiale Vertiefung der Mantelfläche 17 hervorzurufen.

Von Vorteil ist in jedem Fall, wenn sich die statisch dichtende Dichtpartie 25 an dem der Rückfläche 16 axial entgegengesetzten vorderen Endbereich der Grundfläche 15 befindet und die Abstützpartie 28 an dem der Grundfläche 15 radial entgegengesetzten Endbereich der Rückfläche 16 angeordnet ist, wie dies bei allen abgebildeten Ausführungsbeispielen der Fall ist.

## Patentansprüche

1. Fluidtechnisches Gerät, insbesondere Ventil, mit zwei in Richtung einer Hauptachse (4) relativ zueinander linear bewegbaren Gerätekomponenten (2, 3), von denen die eine Gerätekomponente (2) die andere Gerätekomponente (3) unter koaxialer Zwischenschaltung mindestens eines Dichtungsringes (5) umschließt, der als Nutring mit einem zur statischen Abdichtung dienenden, eine radiale Grundfläche (15) und eine axiale Rückfläche (16) aufweisenden Basisabschnitt (14) und einer zur dynamischen Abdichtung dienenden, vom Basisabschnitt (14) wegragenden Dichtlippe (8) ausgebildet ist, und der mit seinem Basisabschnitt (14) an der als Haltekomponente (12) fungierenden einen Gerätekomponente gehalten ist, so dass er bei der Relativbewegung mit seiner Dichtlippe (8) an der anderen Gerätekomponente abgleiten kann, **dadurch gekennzeichnet, dass** im von der Vorderseite her Keiner Fluidbeaufschlagung (7) ausgesetzten Zustand des Dichtungsringes (5) zwischen dem Basisabschnitt (14) und der Haltekomponente (12) ein zum Dichtungsring (5) konzentrischer, sich durchgehend teils entlang der Rückfläche (16) und teils entlang der Grundfläche (15) erstreckender Verformungsfreiraum (26) vorhanden ist, der dadurch begrenzt ist, dass der Basisabschnitt (14) einerseits in einer Dichtungszone (27) mit einer an der Grundfläche (15) vorgesehenen, statisch dichtenden Dichtpartie (25) und andererseits in einer Abstützzone (32) mit einer an der Rückfläche (16) vorgesehenen Abstützpartie (28) an der Haltekomponente (12) anliegt oder anliegen kann, wobei der Dichtungsring (5) derart flexibel ausgebildet ist, dass sich sein Basisabschnitt (14) bei einer im Einsatz von der Vorderseite her erfolgenden Fluidbeaufschlagung (7) unter Verringerung des Querschnittes des Verformungsfreiraumes (26) und bei gleichzeitigem Verschwenken um die Abstützzone (32) nach rückwärts verlagern kann.

2. Gerät nach Anspruch 1, **dadurch gekennzeichnet, dass** der Rückfläche (16) des Basisabschnittes (14) axial eine Stirnfläche (18) der Haltekomponente (12) gegenüberliegt, die eine Anschlagfläche zur Begrenzung der möglichen Verlagerungsstrecke des Basisabschnittes (14) bildet.

3. Gerät nach Anspruch 2, **dadurch gekennzeichnet, dass** der Dichtungsring (5) durch die axiale Fluidbeaufschlagung (7) derart verformbar ist, dass er den zwischen der Rückfläche (16) und der als Anschlagfläche fungierenden Stirnfläche (18) befindlichen Teilraum (34) des Verformungsfreiraumes (26) komplett ausfüllt.

4. Gerät nach einem der Ansprüche 1 bis 3, **dadurch gekennzeichnet, dass** die Haltekomponente (12) eine der Grundfläche (15) in bezüglich dieser konzentrischer Anordnung radial gegenüberliegende Mantelfläche (17) und eine der Rückfläche (16) in bezüglich dieser koaxialer Anordnung axial gegenüberliegende Stirnfläche (18) aufweist, wobei der Verformungsfreiraum (26) zwischen diesen sich jeweils gegenüberliegenden Flächen vorhanden ist.

5. Gerät nach Anspruch 4, **dadurch gekennzeichnet, dass** der zwischen der Grundfläche (15) und der Mantelfläche (17) befindliche Teilraum (37) des Verformungsfreiraumes (26) zumindest teilweise von einer radialen Vertiefung (38, 39) des Dichtungsringes (5) und/oder der Haltekomponente (12) gebildet ist.

6. Gerät nach Anspruch 4 oder 5, **dadurch gekennzeichnet, dass** der zwischen der Rückfläche (16) und der Stirnfläche (18) befindliche Teilraum (34) der Verformungsfreiraumes (26) zumindest teilweise von einer axialen Vertiefung (35, 36) des Dichtungsringes (5) und/oder der Haltekomponente (12) gebildet ist.

7. Gerät nach einem der Ansprüche 1 bis 6, **dadurch gekennzeichnet, dass** sich die statisch dichtende Dichtpartie (25) an dem der Rückfläche (16) axial entgegensetzten vorderen Endbereich der Grundfläche (15) befindet.

8. Gerät nach einem der Ansprüche 1 bis 7, **dadurch gekennzeichnet, dass** sich die Abstützpartie (28) an dem der Grundfläche (15) radial entgegengesetzten Endbereich der Rückfläche (16) befindet.

9. Gerät nach einem der Ansprüche 1 bis 8, **dadurch gekennzeichnet, dass** der von der Rückfläche (16) begrenzte Teilraum (34) des Verformungsfreiraumes (26) eine keilförmige Querschnittskontur mit im Bereich der Abstützzone (32) liegender Keilspitze aufweist.

10. Gerät nach einem der Ansprüche 1 bis 9, **dadurch gekennzeichnet, dass** die Haltekomponente (12) von der anderen Komponente (2) umschlossen ist und am Außenumfang den Dichtungsring (5) trägt.

11. Gerät nach einem der Ansprüche 1 bis 10, **dadurch gekennzeichnet, dass** die Haltekomponente (12) die anderen Komponente (3) umschließt und am Innenumfang den Dichtungsring (5) trägt.

12. Gerät nach einem der Ansprüche 1 bis 11, **dadurch gekennzeichnet, dass** der Dichtungsring (5) aus Material mit gummielastischen Eigenschaften besteht.

## Claims

1. Fluid power device, in particular valve, comprising two device components (2, 3) capable of linear movement relative to each other in the direction of a main axis (4), wherein one device component (2) surrounds the other device component (3) with the coaxial interposition of at least one sealing ring (5), which is designed as a groove ring with a base section (14) provided for static sealing and having a radial base surface (15) and an axial back surface (16) and with a sealing lip (8) provided for dynamic sealing and projecting away from the base section (14), and which is held by its base section (14) on the device component acting as retaining component (12), so that it can slide on the other device component with its sealing lip (8) during any relative movement, **characterised in that**, if the sealing ring (5) is not subjected to any fluid pressure (7) from the front, a deformation free space (26) concentric with the sealing ring (5) and extending continuously in part along the back surface (16) and in part along the base surface (15) is formed between the base section (14) and the retaining component (12), which free space is limited by the fact that the base section (14) bears or can bear against the retaining component (12) in a sealing zone (27) with a statically sealing seal section (25) provided on the base surface (15) on the one hand and in a support zone (32) with a support section (28) provided on the back surface (16) on the other hand, wherein the sealing ring (5) is designed to be flexible such that its base section (14) can be displaced towards the rear under fluid pressure (7) acting from the front in operation while reducing the cross-section of the deformation free space (26) and simultaneously pivoting about the support zone (32).

2. Device according to claim 1, **characterised in that**, axially opposite the back surface (16) of the base section (14), there is an end face (18) of the retaining component (12) which forms a stop surface for limiting the potential displacement distance of the base section (14).

3. Device according to claim 2, **characterised in that** the sealing ring (5) is deformable by axial fluid pressure (7) in such a way that it completely fills the sub-space (34) of the deformation free space (26) which is located between the back surface (16) and the end face (18) acting as a stop surface.

4. Device according to any of claims 1 to 3, **characterised in that** the retaining component (12) comprises a circumferential surface (17) disposed radially opposite the base surface (15) with respect to its concentric arrangement and an end face (18) disposed axially opposite the back surface (16) with respect to its coaxial arrangement, the deformation free space (26) lying between these respective opposite surfaces.

5. Device according to claim 4, **characterised in that** the sub-space (37) of the deformation free space (26) which is located between the base surface (15) and the circumferential surface (17) is at least partially represented by a radial depression (38, 39) of the sealing ring (5) and/or of the holding component (12).

6. Device according to claim 4 or 5, **characterised in that** the sub-space (34) of the deformation free space (26) which is located between the back surface (16) and the end face (18) is at least partially represented by an axial depression (35, 36) of the sealing ring (5) and/or of the holding component (12).

7. Device according to any of claims 1 to 6, **characterised in that** statically sealing seal section (25) is located in the front end region of the base surface (15) which is axially opposite the back surface (16).

8. Device according to any of claims 1 to 7, **characterised in that** the support section (28) is located in the end region of the back surface (16) which is radially opposite the base surface (15).

9. Device according to any of claims 1 to 8, **characterised in that** the sub-space (34) of the deformation free space (26) which is bounded by the back surface (16) has a wedge-shaped cross-sectional contour with a wedge tip lying in the region of the support zone (32).

10. Device according to any of claims 1 to 9, **characterised in that** the retaining component (12) is enclosed by the other component (2) and supports the sealing ring (5) on its outer circumference.

11. Device according to any of claims 1 to 10, **characterised in that** the retaining component (12) encloses the other component (3) and supports the sealing ring (5) on its inner circumference.

12. Device according to any of claims 1 to 11, **characterised in that** the sealing ring (5) is made of a material with rubber-elastic properties.

## Revendications

1. Appareil hydraulique, en particulier vanne, avec deux composants d'appareil (2, 3) mobiles linéairement l'un par rapport à l'autre dans la direction d'un axe principal (4), dont le premier composant d'appareil (2) entoure l'autre composant d'appareil (3) avec interposition coaxiale d'au moins une bague d'étanchéité (5) qui est conformée en bague à rainure avec une section de base (14) servant à l'étanchéité statique, présentant une surface de base radiale (15) et une surface de dos axiale (16) et avec une lèvre d'étanchéité (8) formant saillie depuis la section de base (14) et servant à l'étanchéité dynamique, et qui est tenue avec sa section de base (14) sur le premier composant d'appareil servant de composant d'arrêt (12), de sorte qu'elle peut glisser avec sa lèvre d'étanchéité (8) contre l'autre composant d'appareil lors d'un mouvement relatif, **caractérisé en ce que**, quand la bague d'étanchéité (5) n'est exposée à aucune sollicitation de fluide (7) depuis la face antérieure, il se trouve entre la section de base (14) et le composant d'arrêt (12) un espace de déformation (26) concentrique à la bague d'étanchéité (5) et s'étendant de manière continue en partie le long de la surface de dos (16) et en partie le long de la surface de base (15), espace qui est limité par le fait que la section de base (14) s'appuie ou peut s'appuyer contre le composant d'arrêt (12) d'une part dans une zone d'étanchéité (27) avec une partie d'étanchéité (25) hermétique statiquement prévue sur la surface de base (15) et d'autre part dans une zone d'appui (32) avec une partie d'appui (28) prévue sur la surface de dos (16), la bague d'étanchéité (5) étant réalisée flexible de telle manière que sa section de base (14) peut se déplacer vers l'arrière en cas d'exposition au fluide (7) depuis la face antérieure avec réduction de la section de l'espace de déformation (26) et en cas de pivotement simultané autour de la zone d'appui (32).

2. Appareil selon la revendication 1, **caractérisé en ce qu'**en vis-à-vis de la surface de dos (16) de la section de base (14) se trouve axialement une surface frontale (18) du composant d'arrêt (12), qui forme une surface de butée pour limiter la course de déplacement possible de la section de base (14).

3. Appareil selon la revendication 2, **caractérisé en ce que** la bague d'étanchéité (5) est déformable par l'exposition axiale au fluide (7) de telle manière qu'elle remplit complètement la région (34) de l'espace de déformation (26) situé entre la surface de dos (16) et la surface frontale (18) servant de surface de butée.

4. Appareil selon l'une des revendications 1 à 3, **caractérisé en ce que** le compostant d'arrêt (12) présente une surface d'enveloppe (17) opposée radialement à la surface de base (15) en disposition concentrique par rapport à celle-ci et une surface frontale (18) opposée axialement à la surface de dos (16) en disposition coaxiale par rapport à celle-ci, l'espace de déformation (26) étant présent entre ces surfaces en vis-à-vis respectif.

5. Appareil selon la revendication 4, **caractérisé en ce que** la région (37) de l'espace de déformation (26) située entre la surface de base (15) et la surface d'enveloppe (17) est formée au moins partiellement par un renfoncement radial (38, 39) de la bague d'étanchéité (5) et/ou du composant d'arrêt (12).

6. Appareil selon la revendication 4 ou 5, **caractérisé en ce que** la région (34) de l'espace de déformation (26) située entre la surface de dos (16) et la surface frontale (18) est formée au moins partiellement par un renfoncement axial (35, 36) de la bague d'étanchéité (5) et/ou du composant d'arrêt (12).

7. Appareil selon l'une des revendications 1 à 6, **caractérisé en ce que** la partie d'étanchéité (25) hermétique statiquement se trouve sur la zone antérieure d'extrémité de la surface de base (15) opposée axialement à la surface de dos (16).

8. Appareil selon l'une des revendications 1 à 7, **caractérisé en ce que** la partie d'appui (28) se trouve sur la zone d'extrémité de la surface de dos (16) opposée radialement à la surface de base (15).

9. Appareil selon l'une des revendications 1 à 8, **caractérisé en ce que** la région (34) de l'espace de déformation (26) délimitée par la surface de dos (16) présente un contour de section transversale cunéiforme avec une pointe située au niveau de la zone de soutien (32).

10. Appareil selon l'une des revendications 1 à 9, **caractérisé en ce que** le composant d'arrêt (12) est entouré par l'autre composant (2) et porte la bague d'étanchéité (5) sur sa circonférence extérieure.

11. Appareil selon l'une des revendications 1 à 10, **caractérisé en ce que** le composant d'arrêt (12) entoure l'autre composant (3) et porte la bague d'étanchéité (5) sur sa circonférence intérieure.

12. Appareil selon l'une des revendications 1 à 11, **caractérisé en ce que** la bague d'étanchéité (5) est constituée d'un matériau présentant des propriétés élastiques de type caoutchouc.
